# EUROPÄISCHE PATENTANMELDUNG

(11) **EP 4 844 991 A1**
(43) Veröffentlichungstag der Anmeldung: **25.11.2026**
(21) Anmeldenummer: 26180746.5
(22) Anmeldetag: 22.05.2026
(51) Int. Cl.: H02K 1/32, H02K 1/276

(54) **ROTOR MIT KÜHLSYSTEM, ELEKTROMASCHINE UND KRAFTFAHRZEUG**

(30) Priorität: 23.05.2025 DE 102025120195
(71) Anmelder: Volkswagen Aktiengesellschaft, 38440 Wolfsburg (DE)
(72) Erfinder: Weber, Jan-Niklas, 38440 Wolfsburg (DE); Koch, Johannes Moritz Felix, 38440 Wolfsburg (DE); Dittmann, Jochen, 38440 Wolfsburg (DE); Gronwald, Peer-Ole, 38440 Wolfsburg (DE); Lenk, Volker, 38440 Wolfsburg (DE); Bachmann, Tim, 38440 Wolfsburg (DE); Prokoph, Stefan, 38440 Wolfsburg (DE)
(74) Vertreter: Bals & Vogel Patentanwälte PartGmbB

(57) **Zusammenfassung**

Die vorliegende Erfindung betrifft einen Rotor (1) für eine Elektromaschine (2) für ein Antriebssystem (3) zum Antreiben eines Kraftfahrzeugs (4), aufweisend eine sich entlang einer Rotorlängsachse (5) erstreckende Rotorwelle (6) und ein auf der Rotorwelle (6) angeordnetes, aus mehreren Rotorblechscheiben (7) zusammengesetztes Rotorblechpaket (8). In dem Rotorblechpaket (8) sind in Umfangsrichtung (U) verteilt angeordnete Magnettaschen (9) ausgebildet, in welchen Permanentmagnete angeordnet sind. Ferner sind im Rotorblechpaket (8) mehrere in Umfangsrichtung (U) verteilt angeordnete Kühlkanäle (10) ausgebildet, die zur Rotorwelle (6) hin einen Kanaleinlass (11) aufweisen und sich von der Rotorwelle (6) in radiale Richtung (R) sowie in axiale Richtung (A) erstrecken. Die Kühlkanäle (10) sind jeweils mit mindestens einer der Magnettaschen (9) fluidkommunizierend gekoppelt. Ferner betrifft die Erfindung eine Elektromaschine (2) für ein Antriebssystem (3) zum Antreiben eines Kraftfahrzeugs (4) sowie ein Kraftfahrzeug (4) mit einem Antriebssystem (3).

## Beschreibung

Die vorliegende Erfindung betrifft einen Rotor für eine Elektromaschine für ein Antriebssystem zum Antreiben eines Kraftfahrzeugs. Ferner betrifft die Erfindung eine Elektromaschine für ein Antriebssystem zum Antreiben eines Kraftfahrzeugs sowie ein Kraftfahrzeug mit einem Antriebssystem.

Es sind Rotoren für Elektromaschinen zum Antreiben von Kraftfahrzeugen bekannt, bei welchen Permanentmagnete in Magnettaschen in einem Rotorgrundkörper des Rotors angeordnet sind. Rotorgrundkörper sind meistens aus mehreren Rotorblechscheiben, die koaxial zu einer Rotorlängsachse des Rotors angeordnet sind, zusammengesetzt. Der Rotorgrundkörper ist auf einer Rotorwelle des Rotors gehalten. Im Betrieb der Elektromaschine entsteht Wärme, die zur Vermeidung von Überhitzung abgeführt werden muss.

Aus dem Dokument CN 220 325 357 U ist ein Rotor für eine Elektromaschine bekannt, bei welchem Kühlkanäle in dem Rotorgrundkörper ausgebildet sind. Die Kühlkanäle erstrecken sich parallel zur Rotorlängsachse und sind den Magnettaschen direkt benachbart angeordnet, sodass zumindest eine asymmetrische Kühlung der Permanentmagnete gewährleistet ist. Das Dokument WO 2014 / 140 709 A2 betrifft einen Rotor für eine Elektromaschine, bei welchem im Rotorblechpaket mehrere erste Kühlkanäle angeordnet sind, die sich stufenförmig in axialer Richtung sowie in radialer Richtung erstrecken und gemeinsam in einen zweiten Kühlkanal münden, der den Magnettaschen des Rotors benachbart angeordnet ist. Eine Kühlmittelzufuhr ist über einen in der Rotorwelle ausgebildeten zentralen Zuführkanal gewährleistet.

Ferner sind Rotoren bekannt, bei welchen zusätzliche Wuchtscheiben an Außenseiten des Rotorblechpakets angeordnet sind. Zusätzlich oder alternativ zu den Wuchtscheiben können auch eine oder mehrere zusätzliche Kühlscheiben im Inneren des Rotorblechpakets angeordnet werden. In den Wuchtscheiben bzw. Kühlscheiben sind erste Kühlkanäle zum Fördern des Kühlmittels von der Rotorwelle zu radial weiter außenliegenden zweiten Kühlkanälen ausgebildet. An Kanalenden der äußeren Kühlkanäle können Ausströmdüsen zum Ausströmen der Kühlflüssigkeit auf einen Stator der Elektromaschine angeordnet sein.

Bekannte Rotoren haben den Nachteil, dass der Aufbau aufgrund der zusätzlichen kühlflüssigkeitsfördernden Wuchtscheiben und Kühlscheiben sehr aufwendig ist. Zudem erhöhen diese Bauteile die Abmessungen und das Gewicht des Rotors, ohne dabei einen Beitrag zur Drehmomenterzeugung zu leisten. Ferner kann eine asymmetrische Kühlung der Permanentmagnete zu ungewollten Temperaturdifferenzen und somit zu Spannungen im Rotor führen, durch welche ein Verschleiß des Rotors erhöht ist.

Es ist daher Aufgabe der vorliegenden Erfindung, die voranstehend beschriebenen Nachteile bei einem Rotor für eine Elektromaschine eines Antriebssystems zum Antreiben eines Kraftfahrzeugs zu beheben oder zumindest teilweise zu beheben. Insbesondere ist es Aufgabe der vorliegenden Erfindung, einen Rotor für eine Elektromaschine, eine Elektromaschine zum Antreiben eines Kraftfahrzeugs und ein Kraftfahrzeug mit einer Elektromaschine zum Antreiben des Kraftfahrzeugs zu schaffen, die auf eine einfache und kostengünstige Art und Weise eine verbesserte Kühlung des Rotors gewährleisten.

Die voranstehende Aufgabe wird durch die Patentansprüche gelöst. Demnach wird die Aufgabe durch einen Rotor für eine Elektromaschine für ein Antriebssystem zum Antreiben eines Kraftfahrzeugs mit den Merkmalen des unabhängigen Anspruchs 1, durch eine Elektromaschine für ein Antriebssystem zum Antreiben eines Kraftfahrzeugs mit den Merkmalen des nebengeordneten Anspruchs 9 sowie durch ein Kraftfahrzeug mit einem Antriebssystem mit den Merkmalen des nebengeordneten Anspruchs 10 gelöst.

Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Rotor beschrieben sind, selbstverständlich auch im Zusammenhang mit der erfindungsgemäßen Elektromaschine sowie dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch einen Rotor für eine Elektromaschine für ein Antriebssystem zum Antreiben eines Kraftfahrzeugs gelöst. Der Rotor weist eine sich entlang einer Rotorlängsachse erstreckende Rotorwelle und ein auf der Rotorwelle angeordnetes, aus mehreren Rotorblechscheiben zusammengesetztes Rotorblechpaket auf. In dem Rotorblechpaket sind in Umfangsrichtung verteilt angeordnete Magnettaschen ausgebildet, in welchen Permanentmagnete angeordnet sind. Ferner sind im Rotorblechpaket mehrere in Umfangsrichtung verteilt angeordnete Kühlkanäle ausgebildet, die zur Rotorwelle hin einen Kanaleinlass aufweisen und sich von der Rotorwelle in radiale Richtung sowie in axiale Richtung erstrecken. Erfindungsgemäß sind die Kühlkanäle jeweils mit mindestens einer der Magnettaschen fluidkommunizierend gekoppelt.

Die Rotorwelle ist ausgebildet, ein von der Elektromaschine erzeugtes Drehmoment in Richtung Räder des Antriebsstrangs des Kraftfahrzeugs weiterzuleiten, beispielsweise über eine Antriebswelle, ein Getriebe, ein Differential oder dergleichen. Die Rotorwelle weist vorzugsweise Lagersitze zum drehbaren Lagern der Rotorwelle an einem Maschinengehäuse der Elektromaschine auf. Vorzugsweise überragt die Rotorwelle das Rotorblechpaket in axialer Richtung beidseitig. Die Rotorwelle weist in einem zentralen Abschnitt einen Paketsitz auf, auf dem das Rotorblechpaket angeordnet ist, vorzugsweise gemäß einem Presssitz.

In der Rotorwelle ist vorzugsweise ein zentraler Kühlmittelkanal ausgebildet, der sich vorzugsweise zumindest abschnittsweise parallel zur Rotorlängsachse erstreckt. In den zentralen Kühlmittelkanal ist Kühlmittel einleitbar. Hierfür weist der zentrale Kühlmittelkanal vorzugsweise einen oder mehrere Kühlmitteleinlassöffnungen auf, beispielsweise an einer Wellenstirnseite der Rotorwelle, vorzugsweise auf der Rotorlängsachse. Vorzugsweise ist ein überwiegender Abschnitt des zentralen Kühlmittelkanals auf der Rotorlängsachse ausgebildet. Die Rotorwelle kann beispielsweise als Hohlwelle ausgebildet sein.

Der zentrale Kühlmittelkanal weist vorzugsweise einen oder mehrere Verteilerkanäle auf, die sich in radialer Richtung nach außen erstrecken und nach außen offen sind. Vorzugsweise weisen die Verteilerkanäle lediglich eine radiale Erstreckungskomponente auf. Es kann auch vorgesehen sein, dass sich die Verteilerkanäle schräg zur Rotorlängsachse erstrecken und somit eine Erstreckungskomponente in axiale Richtung und/oder Umfangsrichtung aufweisen. Über die Verteilerkanäle ist die Kühlflüssigkeit gezielt zum Rotorblechpaket hin führbar.

Das Rotorblechpaket ist aus mehreren Rotorblechscheiben zusammengesetzt. Beispielsweise kann das Rotorblechpaket je nach Größe bzw. Leistung der Elektromaschine aus etwa 400 bis 600 Rotorblechscheiben zusammengesetzt sein. Die Rotorblechscheiben sind koaxial zur Rotorlängsachse angeordnet. Vorzugsweise sind die Rotorblechscheiben miteinander verpresst, verklebt oder dergleichen. Vorzugsweise sind die Rotorblechscheiben aus einem Elektroblech hergestellt. Weiter bevorzugt sind die Rotorblechscheiben elektrisch isoliert, wie beispielsweise über einen Lack oder dergleichen. In dem Rotorblechpaket sind die Magnettaschen ausgebildet, beispielsweise durch entsprechende, vorzugsweise kongruente, Stanzlöcher in den Rotorblechscheiben, die fluchtend zueinander angeordnet sind.

Die Magnettaschen sind vorzugsweise derart angeordnet, dass durch ein symmetrisch angeordnetes Paar Magnettaschen oder durch zwei symmetrisch angeordnete Paare Magnettaschen jeweils ein Pol des Rotors gebildet ist. Der Rotor weist vorzugsweise vier, sechs oder acht Pole auf. Vorzugsweise sind zwischen benachbarten Polen Nebenkühlkanäle ausgebildet, die sich vorzugsweise parallel zur Rotorlängsachse erstrecken und durch durchgehende Wandungen der Rotorblechscheiben von den Magnettaschen getrennt sind.

In den Magnettaschen sind Permanentmagnete angeordnet. Die Permanentmagnete weisen in den Magnettaschen vorzugsweise einen festen Sitz auf, beispielsweise durch einen Presssitz, einen Klebstoff oder dergleichen. Durch eine gezielte, polgerechte Anordnung der Permanentmagnete in den Magnettaschen sind die Pole des Rotors bestimmt. Neben den Permanentmagneten weisen die Magnettaschen Freiräume zum Durchleiten des Kühlmittels auf. Es kann erfindungsgemäß vorgesehen sein, dass zwischen einer Wandung der Magnettaschen und einer Außenfläche der Permanentmagnete mehrere Zwischenkanäle gebildet sind, beispielsweise durch Ausnehmungen oder eine entsprechende, beispielsweise wellenförmige oder zickzackförmige, Ausbildung der Wandung der Magnettaschen. Durch diese Zwischenkanäle ist das Kühlmittel entlang den Permanentmagneten zum direkten Kühlen der Permanentmagnete führbar.

In dem Rotorblechpaket sind ferner mehrere Kühlkanäle ausgebildet, die zur Rotorwelle hin den Kanaleinlass aufweisen. Die Kühlkanäle sind vorzugsweise gleichmäßig in Umfangsrichtung verteilt. Über den Kanaleinlass ist Kühlmittel von einem Verteilerkanal der Rotorwelle aufnehmbar. Kühlmittel ist somit von außen in den zentralen Kühlmittelkanal der Rotorwelle einbringbar, vom zentralen Kühlmittelkanal in die Verteilerkanäle strömbar und von den Verteilerkanälen in die Kühlkanäle des Rotorgrundkörpers weiterleitbar. Die Kühlkanäle weisen eine Erstreckung in radiale Richtung sowie in axiale Richtung auf.

Die Kühlkanäle sind vorzugsweise durch Stanzlöcher der Rotorblechscheiben ausgebildet, die bei einer Rotorblechscheibe parallel zur Rotorlängsachse ausgebildet sind. Durch ein koaxiales Anordnen der Rotorblechscheiben sind die Stanzlöcher in einer Flucht zueinander angeordnet. Somit ist die axiale Erstreckung der Kühlkanäle erzeugt. Zur Erzeugung der radialen Erstreckung der Kühlkanäle weisen die Stanzlöcher benachbarter Rotorblechscheiben unterschiedliche Abstände zur Rotorlängsachse auf. Die Stanzlöcher sind vorzugsweise als Langlöcher ausgebildet, wobei eine Langlochbreite in Umfangsrichtung und eine Langlochlänge in radialer Richtung ausgebildet ist.

Gemäß der Erfindung sind die Kühlkanäle jeweils mit einer oder mehreren Magnettaschen fluidkommunizierend gekoppelt. Somit kann erfindungsgemäß vorgesehen sein, dass der Kühlkanal in eine Magnettasche, in zwei Magnettaschen oder in mehrere Magnettaschen mündet. Vorzugsweise sind die Kühlkanäle jeweils mit zwei Magnettaschen, beispielsweise bei einer V-Anordnung der Magnete, drei Magnettaschen, beispielsweise bei einer inneren V-Anordnung der Magnete mit einem Dachmagneten, oder vier Magnettaschen, beispielsweise bei einer inneren V-Anordnung und einer äußeren V-Anordnung der Magnete, fluidkommunizierend gekoppelt. Alternativ können die Kühlmittelkanäle auch neben den Magnettaschen verlaufen und über Nebenkanäle mit mehreren Magnettaschen fluidkommunizierend gekoppelt sein.

Ein erfindungsgemäßer Rotor für eine Elektromaschine für ein Antriebssystem zum Antreiben eines Kraftfahrzeugs hat gegenüber herkömmlichen Rotoren den Vorteil, dass mit einfachen Mitteln sowie auf eine kostengünstige Art und Weise eine besonders gleichmäßige und somit verbesserte Kühlung des Rotors gewährleistet ist. Durch die fluidkommunizierende Kopplung der Kühlkanäle mit den Magnettaschen ist vom Rotor an den Stellen Wärme abführbar, die sich im Betrieb des Rotors am stärksten erwärmen. Überdies sind auf diese Weise konventionelle Kühlkanäle, die sich neben den Magnettaschen sowie parallel zu den Magnettaschen erstrecken, verzichtbar, sodass auch ein magnetischer Fluss des Rotors verbesserbar ist. Durch die in den Rotorblechscheiben ausgebildeten Kühlkanäle sind zusätzliche Kühlmittelführungsscheiben, wie beispielsweise an den Stirnseiten des Rotorblechpakets oder innerhalb des Rotorblechpakets, verzichtbar, sodass Größe und Gewicht des Rotors bei gleicher Leistung auf vorteilhafte Weise reduzierbar sind.

Gemäß einer bevorzugten Weiterentwicklung kann bei einem Rotor vorgesehen sein, dass die Kühlkanäle jeweils in zwei Magnettaschen münden. Hierfür kann beispielsweise vorgesehen sein, dass die Magnettaschen einer Rotorblechscheibe bzw. einer Rotorblechscheibengruppe aus mehreren Rotorblechscheiben Anschlusskanäle aufweisen, die sich in radialer Richtung von den Magnettaschen in Richtung Rotorlängsachse erstrecken. Bei einer V-Anordnung der Magnettaschen erstrecken sich die Anschlusskanäle vorzugsweise von den Magnettaschenenden, die der Rotorlängsachse zugewandt sind. Eine der Rotorblechscheibe bzw. der Rotorblechscheibengruppe benachbart angeordnete Rotorblechscheibe bzw. der Rotorblechscheibengruppe weist vorzugsweise einen Kühlkanalabschnitt auf, der die Anschlusskanäle miteinander verbindet. Hierfür kann der Kühlkanalabschnitt in radialer Richtung von der Rotorlängsachse wegweisend beispielsweise eine Aufweitung, Abzweigung oder dergleichen aufweisen. Das über die Rotorwelle bereitgestellte Kühlmittel ist somit über den Kühlkanalabschnitt auf beide Anschlusskanäle verteilbar, sodass das Kühlmittel über den Kühlkanal auf zwei Magnettaschen verteilbar ist. Dies hat den Vorteil, dass mit einfachen Mitteln sowie auf eine kostengünstige Art und Weise eine besonders gleichmäßige und somit verbesserte Kühlung des Rotors gewährleistet ist.

Es ist bevorzugt, dass jeweils zwei Magnettaschen in Bezug auf einen Querschnitt des Rotorblechpakets gemäß einer V-Anordnung im Rotorblechpaket angeordnet sind, wobei die Kühlkanäle in jeweils in ein erstes Magnettaschenende der Magnettasche münden, wobei das erste Magnettaschenende näher an der Rotorlängsachse angeordnet ist als ein zweites Magnettaschenende der Magnettasche. Die V-Anordnung ist somit derart im Rotorgrundkörper ausgebildet, dass die benachbarten Magnettaschenenden der V-Anordnung näher an der Rotorlängsachse angeordnet sind als die voneinander wegweisenden Magnettaschenenden. Die benachbarten Magnettaschenenden werden im Rahmen der Erfindung als erste Magnettaschenenden bezeichnet. Die voneinander wegweisenden Magnettaschenenden werden im Rahmen der Erfindung als zweite Magnettaschenenden bezeichnet. Durch diese Anordnung lassen sich Fliehkräfte zur Verteilung des Kühlmittels in den Magnettaschen besser nutzen. Vorzugsweise mündet der Kühlkanal nur in das erste Magnettaschenende und nicht in das zweite Magnettaschenende. Eine Fluidkommunikation zwischen dem Kühlkanal und dem zweiten Magnettaschenende ist somit allenfalls über das erste Magnettaschenende hergestellt. Dies hat den Vorteil, dass mit einfachen Mitteln sowie auf eine kostengünstige Art und Weise eine besonders gleichmäßige und somit verbesserte Kühlung des Rotors gewährleistet ist.

Weiter bevorzugt bilden jeweils zwei Magnettaschen in Bezug auf den Querschnitt des Rotorblechpakets eine innere V-Anordnung und jeweils zwei Magnettaschen in Bezug auf den Querschnitt des Rotorblechpakets eine äußere V-Anordnung, wobei die innere V-Anordnung und die äußere V-Anordnung eine gemeinsame Symmetrieachse aufweisen, wobei die Kühlkanäle jeweils in eine oder beide Magnettaschen der inneren V-Anordnung münden und mit einer oder beiden Magnettaschen der äußeren V-Anordnung fluidkommunizierend gekoppelt sind. Die innere V-Anordnung ist näher an der Rotorlängsachse angeordnet als die äußere V-Anordnung. Das bedeutet, dass zumindest ein Abschnitt der inneren V-Anordnung näher an der Rotorlängsachse angeordnet als die gesamte äußere V-Anordnung und/oder dass zumindest ein Abschnitt der äußeren V-Anordnung weiter von der Rotorlängsachse entfernt angeordnet als die gesamte innere V-Anordnung. Eine Orientierung der inneren V-Anordnung entspricht vorzugsweise einer Orientierung der äußeren V-Anordnung, sodass die einander zugewandten Magnettaschenenden der jeweiligen V-Anordnungen vorzugsweise näher an der Rotorlängsachse angeordnet sind als die abgewandten Magnettaschenenden derselben V-Anordnung. Vorzugsweise münden die Kühlkanäle direkt in die Magnettaschen der inneren V-Anordnung. Dies hat den Vorteil, dass mit einfachen Mitteln sowie auf eine kostengünstige Art und Weise ein Rotor mit einer hohen magnetischen Feldstärke bereitgestellt ist, bei welchem eine besonders gleichmäßige und somit verbesserte Kühlung gewährleistet ist.

In einer besonders bevorzugten Ausgestaltung kann bei einem Rotor vorgesehen sein, dass die Magnettaschen der äußeren V-Anordnung über einen Verbindungskanal mit den Magnettaschen der inneren V-Anordnung fluidkommunizierend gekoppelt sind und/oder dass die Kühlkanäle jeweils in eine oder beide Magnettaschen der äußeren V-Anordnung münden. Bei einem Verbindungskanal ist Kühlmittel über die Kühlkanäle in die Magnettaschen der inneren V-Anordnung einbringbar und über die Verbindungskanäle von den Magnettaschen der inneren V-Anordnung in die Magnettaschen der äußeren V-Anordnung weiterleitbar. Wenn die Kühlkanäle in eine oder beide Magnettaschen der äußeren V-Anordnung münden, weisen die Kühlkanäle vorzugsweise eine oder mehrere Abzweigungen auf, sodass ein Teil eines Kühlkanals in eine oder beide Magnettaschen der inneren V-Anordnung mündet und ein anderer Teil des Kühlkanals in eine oder beide Magnettaschen der äußeren V-Anordnung mündet. Somit ist sichergestellt, dass das durch die Kühlkanäle durchgeleitete Kühlmittel in sämtliche Magnettaschen weiterleitbar ist. Dies hat den Vorteil, dass mit einfachen Mitteln sowie auf eine kostengünstige Art und Weise eine besonders gleichmäßige und somit verbesserte Kühlung des Rotors gewährleistet ist.

Vorzugsweise erstrecken sich die Kühlkanäle schraubenförmig um die Rotorlängsachse herum. Dies kann beispielsweise dadurch erreicht werden, dass Stanzlöcher benachbarter Rotorblechscheiben in Umfangsrichtung versetzt zueinander angeordnet sind. Unter einer schraubenförmigen Ausbildung wird im Rahmen der Erfindung insbesondere eine schraubenförmige Ausbildung mit zunehmendem Radius verstanden, sodass ein Fördern des Kühlmittels von der Rotorwelle zu den Magnettaschen gewährleistet ist. Somit weisen die Kühlkanäle eine axiale Erstreckungskomponente, eine radiale Erstreckungskomponente und eine Erstreckungskomponente in Umfangsrichtung auf. Dies hat den Vorteil, dass mit einfachen Mitteln sowie auf eine kostengünstige Art und Weise eine besonders gleichmäßige und somit verbesserte Kühlung des Rotors gewährleistet ist.

Gemäß einer bevorzugten Ausführungsform der Erfindung kann bei einem Rotor vorgesehen sein, dass die Rotorblechscheiben zu mehreren gleichen Paketsegmenten zusammengesetzt sind, wobei das Rotorblechpaket aus mehreren der gleichen Paketsegmente zusammengesetzt ist. Die einzelnen Paketsegmente weisen hierbei vorzugsweise eine Vielzahl von Rotorblechscheiben auf, die zumindest teilweise unterschiedlich ausgebildet sind. Hierbei können die Rotorblechscheiben beispielsweise in mehrere verschiedene Gruppen eingeteilt sein. Die Rotorblechscheiben der Paketsegmente weisen vorzugsweise allesamt eine zentrale Ausstanzung für einen Sitz des Rotorblechpakets auf der Rotorwelle auf. Mehrere oder sämtliche Rotorblechscheiben weisen vorzugsweise zusätzlich die Ausstanzungen für die Magnettaschen auf. Einige der Rotorblechscheiben weisen vorzugsweise zusätzlich die Ausstanzungen für einen den Kanaleinlass aufweisenden ersten Kanalabschnitt des Kühlkanals auf. Einige der Rotorblechscheiben weisen vorzugsweise alternativ oder zusätzlich zu den Ausstanzungen des ersten Kanalabschnitts die Ausstanzungen für einen zweiten Kanalabschnitt des Kühlkanals auf. Einige der Rotorblechscheiben weisen vorzugsweise zusätzlich oder alternativ zu den Ausstanzungen des ersten Kanalabschnitts und den Ausstanzungen des zweiten Kanalabschnitts die Ausstanzungen für einen weiteren Kanalabschnitt des Kühlkanals auf, über welche der Kühlkanal in die Magnettaschen mündet. Erfindungsgemäß können auch noch weitere zwischen dem ersten Kanalabschnitt und dem dritten Kanalabschnitt angeordnete Kanalabschnitte in einigen Rotorblechscheiben ausgebildet sein. Vorzugsweise ist das Rotorblechpaket aus vier Paketsegmenten zusammengesetzt. Vorzugsweise sind gleich ausgebildete Stirnseiten der Paketsegmente einander benachbart angeordnet. Dies hat den Vorteil, dass mit einfachen Mitteln sowie auf eine kostengünstige Art und Weise eine besonders gleichmäßige und somit verbesserte Kühlung des Rotors gewährleistet ist.

Es kann vorgesehen sein, dass die Paketsegmente eine Endscheibe aufweisen, wobei in den Endscheiben Düsen zum Aussprühen von Kühlmittel aus den Kühlkanälen ausgebildet sind. Die Düsen sind vorzugsweise fluidkommunizierend mit den Magnettaschen ausgebildet, sodass das Kühlmittel vom Kühlkanal in die Magnettaschen und aus den Magnettaschen über die Düsen versprühbar ist. Die Düsen können beispielsweise zum Versprühen des Kühlmittels in axialer Richtung sowie in radialer Richtung weg vom Rotorgrundkörper ausgebildet sein. Somit sind beispielsweise Wickelköpfe eines Stators der Elektromaschine gezielt kühlbar. Dies hat den Vorteil, dass mit einfachen Mitteln sowie auf eine kostengünstige Art und Weise eine besonders gleichmäßige und somit verbesserte Kühlung der Elektromaschine gewährleistet ist.

Gemäß einem zweiten Aspekt der Erfindung wird die Aufgabe durch eine Elektromaschine für ein Antriebssystem zum Antreiben eines Kraftfahrzeugs gelöst. Die Elektromaschine weist einen sich um eine Statorlängsachse erstreckenden Stator, ein den Stator umgebendes Maschinengehäuse und eine Leistungselektronik zum gezielten Bestromen des Stators auf. Erfindungsgemäß weist die Elektromaschine einen koaxial zum Stator angeordneten erfindungsgemäßen Rotor auf. Die erfindungsgemäße Elektromaschine ist vorzugsweise zum eigenständigen Antreiben des Kraftfahrzeugs ausgebildet.

Der Stator erstreckt sich entlang der Statorlängsachse und weist einen Statorgrundkörper auf, der vorzugsweise aus mehreren Elektroblechscheiben gebildet ist, die koaxial zueinander angeordnet sind. Im Statorgrundkörper sind Statornuten ausgebildet, in denen eine Statorwicklung des Stators angeordnet ist. Die Statorwicklung ist vorzugsweise als Hairpin-Wicklung, beispielsweise aus I-Pins oder U-Pins, ausgebildet. Das Maschinengehäuse umgibt den Stator und den Rotor, wobei vorzugsweise zumindest ein Wellenende der Rotorwelle an einer Seite aus dem Maschinengehäuse herausragt. Die Rotorwelle kann am Stator oder Maschinengehäuse drehbar gelagert sein. Die Leistungselektronik ist zum gezielten Bestromen der Statorwicklung ausgebildet und hierfür mit der Statorwicklung elektrisch verschaltet. Vorzugsweise ist die Leistungselektronik in einem Bereich des Maschinengehäuses angeordnet, der flüssigkeitsdicht zum Rotor abgedichtet ist.

Bei der erfindungsgemäßen Elektromaschine für ein Antriebssystem zum Antreiben eines Kraftfahrzeugs ergeben sich sämtliche Vorteile, die bereits zu einem Rotor für eine Elektromaschine für ein Antriebssystem zum Antreiben eines Kraftfahrzeugs gemäß dem ersten Aspekt der Erfindung beschrieben worden sind. Demnach hat die erfindungsgemäße Elektromaschine gegenüber herkömmlichen Elektromaschinen den Vorteil, dass mit einfachen Mitteln sowie auf eine kostengünstige Art und Weise eine besonders gleichmäßige und somit verbesserte Kühlung des Rotors gewährleistet ist. Durch die fluidkommunizierende Kopplung der Kühlkanäle mit den Magnettaschen ist vom Rotor an den Stellen Wärme abführbar, die sich im Betrieb des Rotors am stärksten erwärmen. Überdies sind auf diese Weise konventionelle Kühlkanäle, die sich neben den Magnettaschen sowie parallel zu den Magnettaschen erstrecken, verzichtbar, sodass auch ein magnetischer Fluss des Rotors verbesserbar ist. Durch die in den Rotorblechscheiben ausgebildeten Kühlkanäle sind zusätzliche Kühlmittelführungsscheiben, wie beispielsweise an den Stirnseiten des Rotorblechpakets oder innerhalb des Rotorblechpakets, verzichtbar, sodass Größe und Gewicht des Rotors bei gleicher Leistung auf vorteilhafte Weise reduzierbar sind.

Gemäß einem dritten Aspekt der Erfindung wird die Aufgabe durch ein Kraftfahrzeug gelöst. Das Kraftfahrzeug weist ein Antriebssystem auf, wobei das Antriebssystem als elektrisches Antriebssystem oder als hybrides Antriebssystem ausgebildet ist. Erfindungsgemäß weist das Antriebssystem zum Antreiben des Kraftfahrzeugs eine erfindungsgemäße Elektromaschine auf. Ein hybrides Antriebssystem weist zum Antreiben des Kraftfahrzeugs eine Verbrennungskraftmaschine und die erfindungsgemäße Elektromaschine auf. Ein elektrisches Antriebssystem weist zum Antreiben des Kraftfahrzeugs eine oder zwei erfindungsgemäße Elektromaschinen auf. Die erfindungsgemäße Elektromaschine ist vorzugsweise zum eigenständigen Antreiben des Kraftfahrzeugs ausgebildet.

Bei dem erfindungsgemäßen Kraftfahrzeug ergeben sich sämtliche Vorteile, die bereits zu einem Rotor für eine Elektromaschine für ein Antriebssystem zum Antreiben eines Kraftfahrzeugs gemäß dem ersten Aspekt der Erfindung sowie zu einer Elektromaschine für ein Antriebssystem zum Antreiben eines Kraftfahrzeugs gemäß dem zweiten Aspekt der Erfindung beschrieben worden sind. Demnach hat das erfindungsgemäße Kraftfahrzeug gegenüber herkömmlichen Kraftfahrzeugen den Vorteil, dass mit einfachen Mitteln sowie auf eine kostengünstige Art und Weise eine besonders gleichmäßige und somit verbesserte Kühlung des Rotors gewährleistet ist. Durch die fluidkommunizierende Kopplung der Kühlkanäle mit den Magnettaschen ist vom Rotor an den Stellen Wärme abführbar, die sich im Betrieb des Rotors am stärksten erwärmen. Überdies sind auf diese Weise konventionelle Kühlkanäle, die sich neben den Magnettaschen sowie parallel zu den Magnettaschen erstrecken, verzichtbar, sodass auch ein magnetischer Fluss des Rotors verbesserbar ist. Durch die in den Rotorblechscheiben ausgebildeten Kühlkanäle sind zusätzliche Kühlmittelführungsscheiben, wie beispielsweise an den Stirnseiten des Rotorblechpakets oder innerhalb des Rotorblechpakets, verzichtbar, sodass Größe und Gewicht des Rotors bei gleicher Leistung auf vorteilhafte Weise reduzierbar sind.

Ein erfindungsgemäßer Rotor, eine erfindungsgemäße Elektromaschine sowie ein erfindungsgemäßes Kraftfahrzeug werden nachfolgend anhand von Zeichnungen näher erläutert.

Es zeigen jeweils schematisch:
- Figur 1: in Draufsicht verschiedene Rotorblechscheiben eines Rotorblechpakets gemäß einer bevorzugten ersten Ausführungsform der Erfindung,
- Figur 2: in einer Detailansicht mehrere Rotorblechscheiben unterschiedlicher Rotorblechpakete gemäß diverser bevorzugter Ausführungsformen der Erfindung,
- Figur 3: in einer Schnittdarstellung ein aus vier gleichen Paketsegmenten zusammengesetztes Rotorblechpaket,
- Figur 4: in einer Schnittdarstellung einen Rotor gemäß einer bevorzugten Ausführungsform der Erfindung,
- Figur 5: in einer explodierten Schnittdarstellung den Rotor aus Figur 4,
- Figur 6: in einer explodierten perspektivischen Ansicht eine Elektromaschine gemäß einer bevorzugten Ausführungsform der Erfindung und
- Figur 7: in einer Seitenansicht eine bevorzugte Ausführungsform eines erfindungsgemäßen Kraftfahrzeugs.

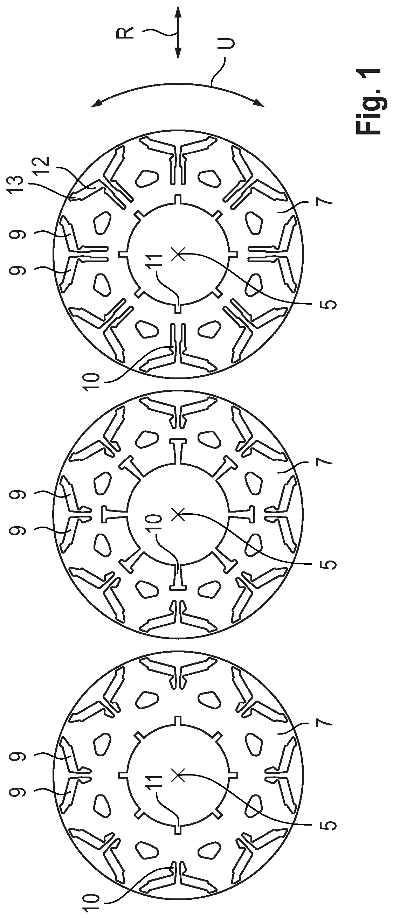

Elemente mit gleicher Funktion und Wirkungsweise sind in den Fig. 1 bis 7 jeweils mit denselben Bezugszeichen versehen.

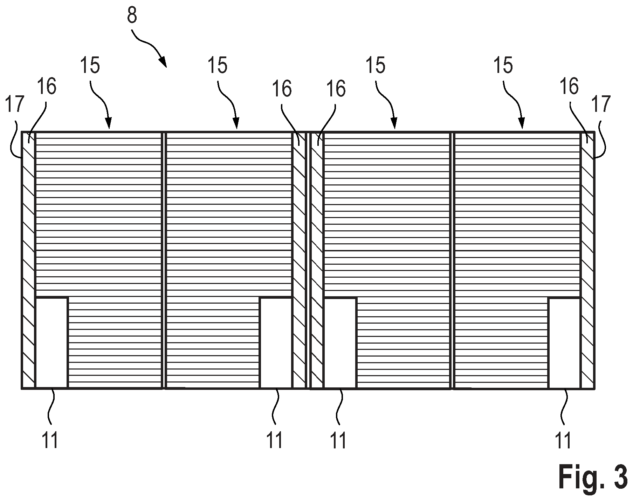

In Fig. 1 sind verschiedene Rotorblechscheiben 7 eines Rotorblechpakets 8 (vgl. Fig. 3) gemäß einer bevorzugten ersten Ausführungsform der Erfindung schematisch in einer Draufsicht abgebildet. Die Rotorblechscheiben 7 weisen in Umfangsrichtung U mehrere Magnettaschen 9 zur Anordnung nicht dargestellter Permanentmagnete auf.

Die Magnettaschen 9 sind jeweils paarweise in einer V-Anordnung angeordnet und weisen jeweils ein erstes Magnettaschenende 12 und ein zweites Magnettaschenende 13 auf. Bei den einzelnen Paaren der Magnettaschen 9 sind die ersten Magnettaschenenden 12 jeweils einander zugewandt angeordnet, während die zweiten Magnettaschenenden 13 voneinander abgewandt sind. Ferner sind die ersten Magnettaschenenden 12 näher an einer Rotorlängsachse 5 angeordnet als die zweiten Magnettaschenenden 13.

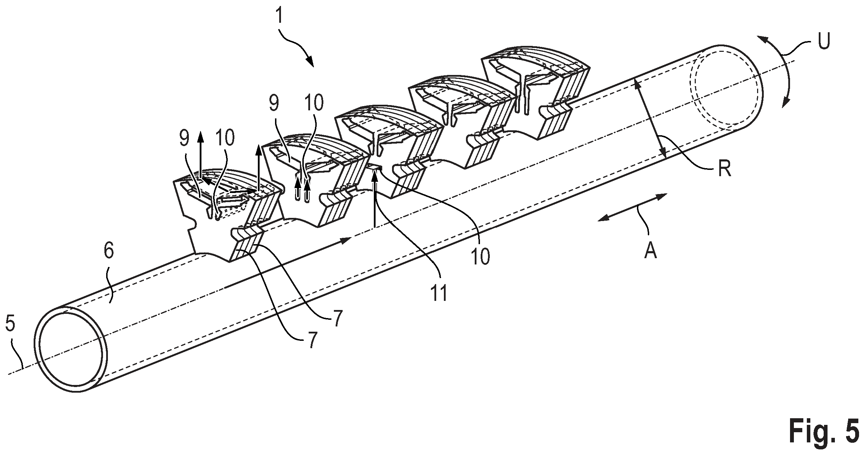

Die Rotorblechscheiben 7 weisen jeweils einen anderen Abschnitt eines Kühlkanals 10 auf, die zusammengesetzt einen gemeinsamen Kühlkanal 10 bilden, der sich in radialer Richtung R und in axialer Richtung A (vgl. Fig. 5) erstreckt. Zur Rotorlängsachse 5 offene Kanaleinlässe 11 sind in allen Rotorblechscheiben 7 ausgebildet. Die Kühlkanäle 10 sind derart ausgebildet, dass über den Kanaleinlass 11 Kühlmittel in den Kühlkanal 10 einbringbar ist und über den Kühlkanal 10 Kühlmittel in jeweils zwei Magnettaschen 9 leitbar ist. Die Kühlkanäle 10 münden in die Magnettaschen 9 an den ersten Magnettaschenenden 12.

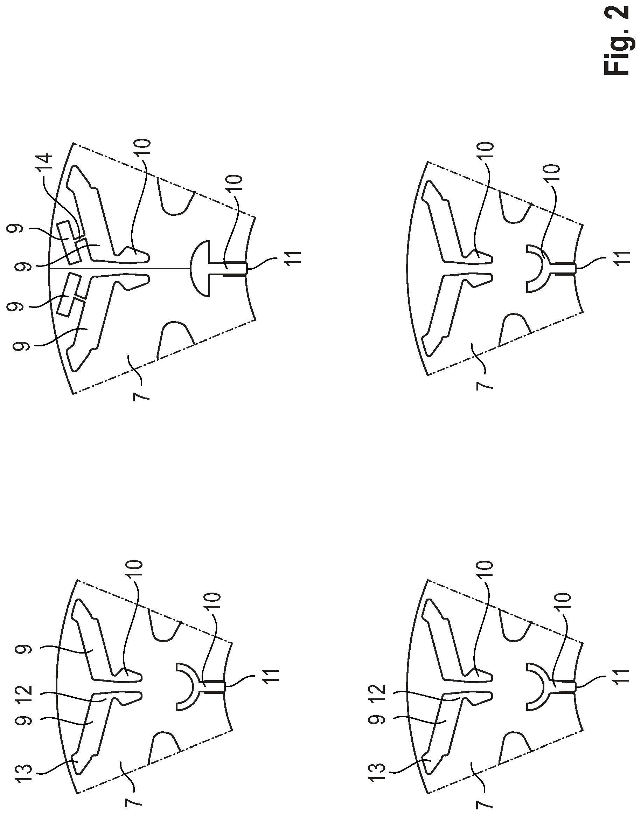

Fig. 2 zeigt mehrere Rotorblechscheiben 7 unterschiedlicher Rotorblechpakete 8 gemäß diverser bevorzugter Ausführungsformen der Erfindung schematisch in einer Draufsicht. Die Rotorblechscheiben 7 weisen allesamt paarweise in einer V-Anordnung angeordnete Magnettaschen 9 auf. Die Rotorblechscheiben 7 unterscheiden sich in einer Ausbildung der Kühlkanäle 10 im Bereich des Kanaleinlasses 11. Die in dieser Ansicht oben links angeordnete Rotorblechscheibe 7 weist einen symmetrisch ausgebildeten Kühlkanal 10 auf, der in Durchströmrichtung eine Abzweigung aufweist. Die in dieser Ansicht oben rechts angeordnete Rotorblechscheibe 7 weist einen symmetrisch ausgebildeten Kühlkanal 10 auf, der in Durchströmrichtung eine pilzförmige Aufweitung aufweist.

Bei der in dieser Ansicht unten links angeordneten Rotorblechscheibe 7 ist der Kühlkanal 10 im Bereich des Kanaleinlasses 11 in Durchströmrichtung aufgeweitet ausgebildet. Der Kühlkanal 10 weist im Anschluss eine Abzweigung auf. Bei der in dieser Ansicht unten rechts angeordneten Rotorblechscheibe 7 weist der Kühlkanal 10 in Durchströmrichtung eine Abzweigung auf, wobei Kanäle der Abzweigung unterschiedliche Durchmesser aufweisen. Die in dieser Ansicht oben rechts abgebildete Rotorblechscheibe 7 weist zudem zusätzliche Magnettaschen 9 auf, die paarweise eine äußere V-Anordnung bilden. Die Magnettaschen 9 der äußeren V-Anordnung sind über Verbindungskanäle 14 mit den Magnettaschen 9 der weiter innen angeordneten V-Anordnung fluidkommunizierend gekoppelt.

In Fig. 3 ist ein aus vier gleichen Paketsegmenten 15 zusammengesetztes Rotorblechpaket 8 schematisch in einer Schnittdarstellung dargestellt. Die Paketsegmente 15 weisen jeweils an einer Seite eine Endscheibe 16 auf, in der mehrere Düsen 17 ausgebildet sind. Die Paketsegmente 15 sind derart zum Rotorblechpaket 8 zusammengesetzt, dass das Rotorblechpaket 8 beidseitig durch Endscheiben 16 abgeschlossen ist. Ferner sind die Endscheiben 16 der inneren Paketsegmente 15 einander zugewandt.

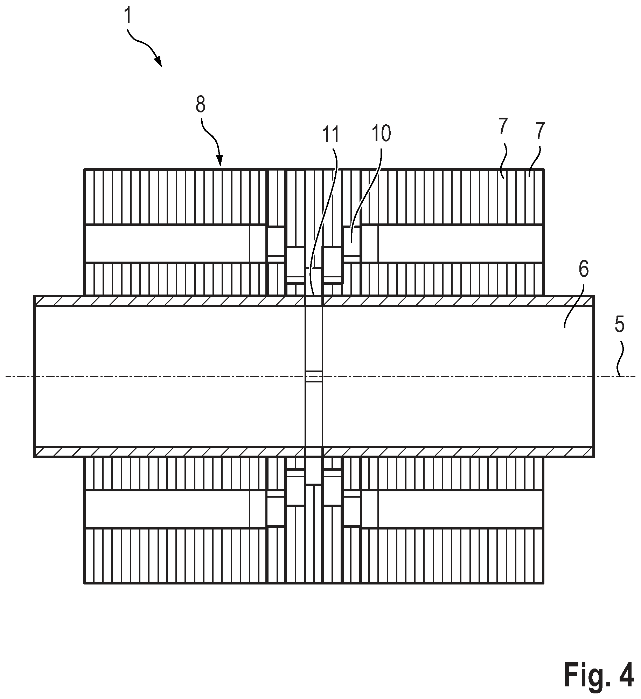

Fig. 4 zeigt einen Rotor 1 gemäß einer bevorzugten Ausführungsform der Erfindung schematisch in einer Schnittdarstellung. Der Rotor 1 weist eine Rotorwelle 6 auf, die als Hohlwelle ausgebildet ist und sich entlang einer Rotorlängsachse 5 erstreckt. Auf der Rotorwelle 6 ist ein Rotorblechpaket 8 des Rotors 1 angeordnet. Das Rotorblechpaket 8 ist aus mehreren Rotorblechscheiben 7 derart zusammengesetzt, dass im Rotorblechpaket 8 ein Kühlkanal 10 gebildet ist, der über einen Kanaleinlass 11 mit einer Bohrung der Rotorwelle 6 fluidkommunizierend gekoppelt ist.

In Fig. 5 ist der Rotor 1 aus Fig. 4 schematisch in einer explodierten Schnittdarstellung abgebildet. In dieser Ansicht ist das Zusammenspiel mehrerer unterschiedlich ausgebildeter Rotorblechscheiben 7 gut erkennbar. Einige Rotorblechscheiben 7 weisen den Kanaleinlass 11 und einen ersten Abschnitt des Kühlkanals 10 auf. Benachbarte Rotorblechscheiben 7 weisen einen mittleren Abschnitt des Kühlkanals 10 auf. Benachbarte Rotorblechscheiben 7 weisen einen Endabschnitt des Kühlkanals 10 auf, der in zwei Magnettaschen 9 mündet.

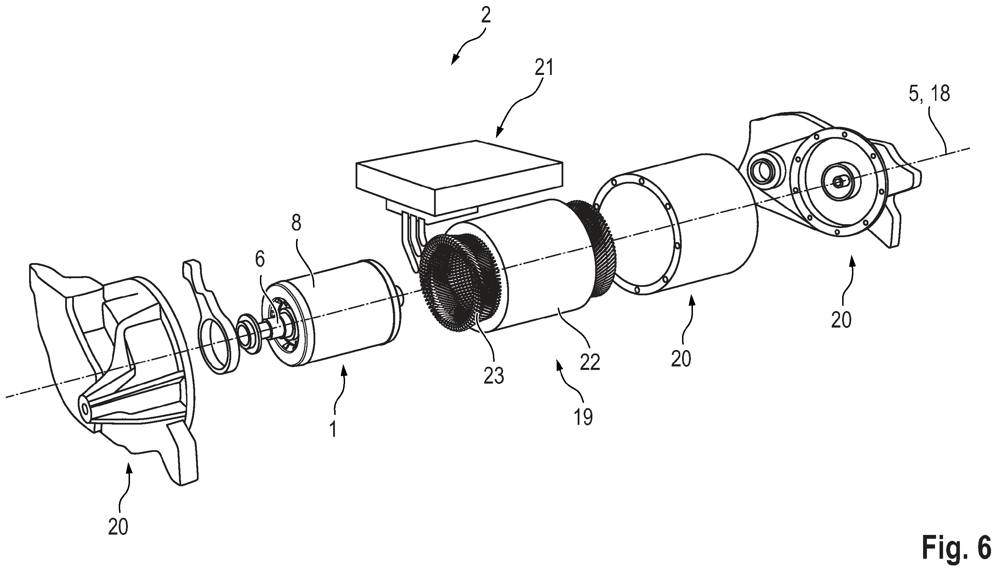

Fig. 6 zeigt eine Elektromaschine 2 gemäß einer bevorzugten Ausführungsform der Erfindung schematisch in einer explodierten perspektivischen Ansicht. Die Elektromaschine 2 weist einen sich entlang einer Statorlängsachse 18 erstreckenden Stator 19 mit einem Statorgrundkörper 22 auf, an dem eine als Hairpin-Wicklung ausgebildete Statorwicklung 23 des Stators 19 angeordnet ist. Die Statorwicklung 23 ist mit einer Leistungselektronik 21 elektrisch verschaltet.

Im Stator 19 ist ein erfindungsgemäßer Rotor 1 derart angeordnet, dass die Rotorlängsachse 5 koaxial zur Statorlängsachse 18 angeordnet ist. Der Rotor 1 weist ein Rotorblechpaket 8 auf, welches auf einer Rotorwelle 6 angeordnet ist. Der Stator 19 ist von einem mehrteiligen Maschinengehäuse 20 umgeben. Der Rotor 1 ist am Maschinengehäuse 20 drehbar gelagert.

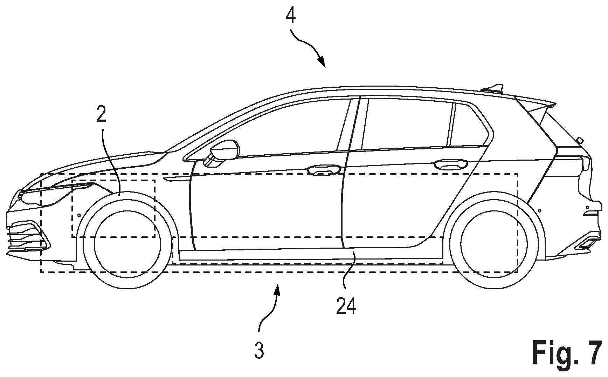

In Fig. 7 ist eine bevorzugte Ausführungsform eines erfindungsgemäßen Kraftfahrzeugs 4 schematisch in einer Seitenansicht dargestellt. Das Kraftfahrzeug 4 weist ein elektrisches Antriebssystem 3 mit einer Elektromaschine 2 zum Antreiben des Kraftfahrzeugs 4 und einer Traktionsbatterie 24 zum Versorgen der Elektromaschine 2 mit elektrischer Energie auf.

### Bezugszeichenliste

- 1: Rotor
- 2: Elektromaschine
- 3: Antriebssystem
- 4: Kraftfahrzeug
- 5: Rotorlängsachse
- 6: Rotorwelle
- 7: Rotorblechscheibe
- 8: Rotorblechpaket
- 9: Magnettasche
- 10: Kühlkanal
- 11: Kanaleinlass
- 12: erstes Magnettaschenende
- 13: zweites Magnettaschenende
- 14: Verbindungskanal
- 15: Paketsegment
- 16: Endscheibe
- 17: Düse
- 18: Statorlängsachse
- 19: Stator
- 20: Maschinengehäuse
- 21: Leistungselektronik
- 22: Statorgrundkörper
- 23: Statorwicklung
- 24: Traktionsbatterie

- A: axiale Richtung
- R: radiale Richtung
- U: Umfangsrichtung

## Patentansprüche

1. Rotor (1) für eine Elektromaschine (2) für ein Antriebssystem (3) zum Antreiben eines Kraftfahrzeugs (4), aufweisend eine sich entlang einer Rotorlängsachse (5) erstreckende Rotorwelle (6) und ein auf der Rotorwelle (6) angeordnetes, aus mehreren Rotorblechscheiben (7) zusammengesetztes Rotorblechpaket (8), wobei in dem Rotorblechpaket (8) in Umfangsrichtung (U) verteilt angeordnete Magnettaschen (9) ausgebildet sind, in welchen Permanentmagnete angeordnet sind, wobei im Rotorblechpaket (8) mehrere in Umfangsrichtung (U) verteilt angeordnete Kühlkanäle (10) ausgebildet sind, die zur Rotorwelle (6) hin einen Kanaleinlass (11) aufweisen und sich von der Rotorwelle (6) in radiale Richtung (R) sowie in axiale Richtung (A) erstrecken,
**dadurch gekennzeichnet,**
**dass** die Kühlkanäle (10) jeweils mit mindestens einer der Magnettaschen (9) fluidkommunizierend gekoppelt sind.

2. Rotor (1) nach Anspruch 1,
**dadurch gekennzeichnet,**
**dass** die Kühlkanäle (10) jeweils in zwei Magnettaschen (9) münden.

3. Rotor (1) nach Anspruch 1 oder 2,
**dadurch gekennzeichnet,**
**dass** jeweils zwei Magnettaschen (9) in Bezug auf einen Querschnitt des Rotorblechpakets (8) gemäß einer V-Anordnung im Rotorblechpaket (8) angeordnet sind, wobei die Kühlkanäle (10) jeweils in ein erstes Magnettaschenende (12) der Magnettasche (9) münden, wobei das erste Magnettaschenende (12) näher an der Rotorlängsachse (5) angeordnet ist als ein zweites Magnettaschenende (13) der Magnettasche (9).

4. Rotor (1) nach einem der vorangegangenen Ansprüche,
**dadurch gekennzeichnet,**
**dass** jeweils zwei Magnettaschen (9) in Bezug auf den Querschnitt des Rotorblechpakets (8) eine innere V-Anordnung und jeweils zwei Magnettaschen (9) in Bezug auf den Querschnitt des Rotorblechpakets (8) eine äußere V-Anordnung bilden, wobei die innere V-Anordnung und die äußere V-Anordnung eine gemeinsame Symmetrieachse aufweisen, wobei die Kühlkanäle (10) jeweils in eine oder beide Magnettaschen (9) der inneren V-Anordnung münden und mit einer oder beiden Magnettaschen (9) der äußeren V-Anordnung fluidkommunizierend gekoppelt sind.

5. Rotor (1) nach Anspruch 4,
**dadurch gekennzeichnet,**
**dass** die Magnettaschen (9) der äußeren V-Anordnung über einen Verbindungskanal (14) mit den Magnettaschen (9) der inneren V-Anordnung fluidkommunizierend gekoppelt sind und/oder dass die Kühlkanäle (10) jeweils in eine oder beide Magnettaschen (9) der äußeren V-Anordnung münden.

6. Rotor (1) nach einem der vorangegangenen Ansprüche,
**dadurch gekennzeichnet,**
**dass** sich die Kühlkanäle (10) schraubenförmig um die Rotorlängsachse (5) herum erstrecken.

7. Rotor (1) nach einem der vorangegangenen Ansprüche,
**dadurch gekennzeichnet,**
**dass** die Rotorblechscheiben (7) zu mehreren gleichen Paketsegmenten (15) zusammengesetzt sind, wobei das Rotorblechpaket (8) aus mehreren der gleichen Paketsegmente (15) zusammengesetzt ist.

8. Rotor (1) nach Anspruch 7,
**dadurch gekennzeichnet,**
**dass** die Paketsegmente (15) eine Endscheibe (16) aufweisen, wobei in den Endscheiben (16) Düsen (17) zum Aussprühen von Kühlmittel aus den Kühlkanälen (10) ausgebildet sind.

9. Elektromaschine (2) für ein Antriebssystem (3) zum Antreiben eines Kraftfahrzeugs (4), aufweisend einen sich um eine Statorlängsachse (18) erstreckenden Stator (19), ein den Stator (19) umgebendes Maschinengehäuse (20) und eine Leistungselektronik (21) zum gezielten Bestromen des Stators (19),
**dadurch gekennzeichnet,**
**dass** die Elektromaschine (2) einen koaxial zum Stator (19) angeordneten Rotor (1) nach einem der vorangegangenen Ansprüche aufweist.

10. Kraftfahrzeug (4), aufweisend ein Antriebssystem (3), wobei das Antriebssystem (3) als elektrisches Antriebssystem (3) oder als hybrides Antriebssystem (3) ausgebildet ist, **dadurch gekennzeichnet,**
**dass** das Antriebssystem (3) zum Antreiben des Kraftfahrzeugs (4) eine Elektromaschine (2) nach Anspruch 9 aufweist.
